# FASCICULE DE BREVET EUROPEEN

(11) **EP 0 442 794 B1**
(45) Date de publication et mention de la délivrance du brevet: **27.10.1993**
(21) Numéro de dépôt: 91400332.2
(22) Date de dépôt: 12.02.1991
(51) Int. Cl.: F23L 15/04

(54) **Dispositif de réchauffage de deux fractions de gaz en échange de chaleur avec des fumées**
Vorrichtung zur Aufwärmung von zwei Gasfraktionen in Wärmeaustausch mit Rauchgasen
Device for heating two gas fractions on heat exchange with fumes

(30) Priorité: 13.02.1990 FR 9001685
(43) Date de publication de la demande: 21.08.1991
(73) Titulaire: STEIN INDUSTRIE Société Anonyme dite:, F-78140 Vélizy Villacoublay (FR)
(72) Inventeur: Enault, Christian, F-92260 Fontenay aux Roses (FR)
(74) Mandataire: Weinmiller, Jürgen

(56) Documents cités:
- EP-A- 0 211 699
- EP-A- 0 246 486
- GB-A- 2 076 134
- GB-A- 2 104 206

## Description

La présente invention concerne un dispositif de réchauffage de deux fractions de gaz, différentes ou sous des pressions différentes, en échange de chaleur avec des fumées résultant de la combustion d'un combustible, notamment en lit fluidisé, comprenant des faisceaux tubulaires parcourus par les fumées et autour desquels circule une première fraction de gaz à réchauffer, à l'intérieur d'un caisson entouré par une enceinte dans laquelle circule une seconde fraction de gaz.

Lorsque l'on veut réchauffer en échange de chaleur avec des fumées deux fractions de gaz différentes ou sous des pressions différentes, par exemple une fraction primaire d'air de fluidisation d'un combustible divisé et une fraction secondaire d'air de combustion, on est généralement amené à disposer en parallèle deux échangeurs à faisceaux tubulaires comme dans le dispositif décrit dans le document EP-A-246486. Ceci entraîne une complication d'appareillage et des coûts importants. De plus il faut régler les admissions de fumées dans les deux échangeurs pour éviter une différence trop importante dans les températures de sortie des fumées.

La présente invention a pour but de procurer un dispositif de réchauffage de deux fractions de gaz, différentes ou sous des pressions différentes, qui ne comporte qu'un seul faisceau tubulaire parcouru par les fumées, et soit donc d'un coût moindre qu'un dispositif à deux échangeurs à faisceau tubulaire en parallèle, tout en n'impliquant pas de pertes sur les fractions de gaz à réchauffer et en ne nécessitant pas des réglages d'admissions des fumées.

Le dispositif selon l'invention est caractérisé en ce qu'il comporte en outre des caloducs munis d'ailettes disposés entre le trajet de cette première fraction de gaz et celui de la seconde fraction de gaz.

De préférence, le trajet de la première fraction de gaz comporte des passages à courants crcisés par rapport aux tubes dans lesquels circulent les fumées, et des passages intermédiaires externes à ces tubes, dans lesquels sont disposés les extrémités des caloducs en échange de chaleur avec la seconde fraction de gaz.

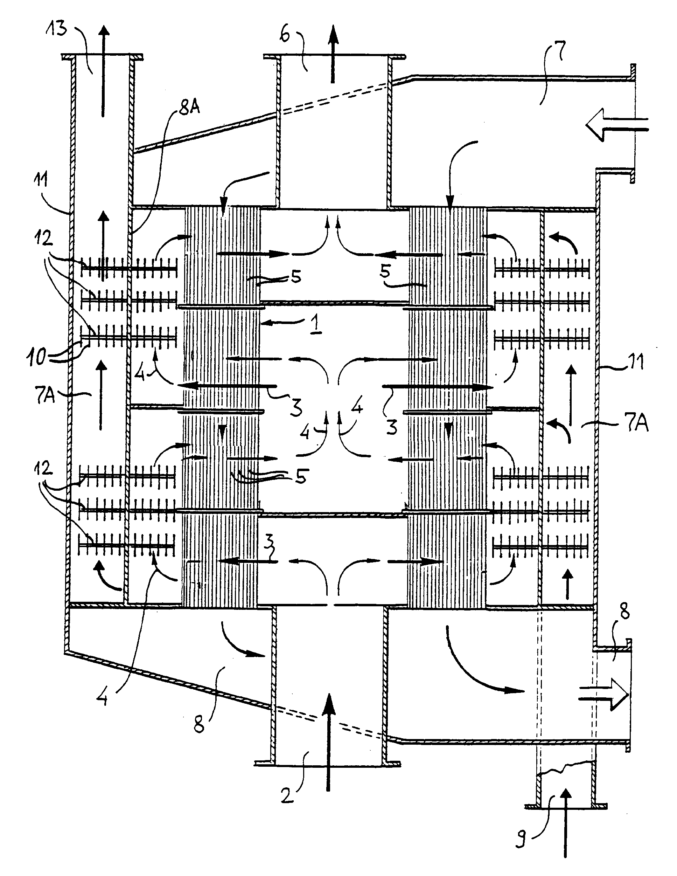

Il est décrit ci-après, à titre d'exemple et en référence à la figure unique du dessin annexé, un dispositif de réchauffage d'une fraction d'air de fluidisation et d'une fraction d'air de combustion pour réacteur de combustion à lit fluidisé circulant de charbon ou autre combustible fossile divisé.

Le dispositif d'échange comprend un faisceau tubulaire 1, composé de tubes 5 à l'intérieur desquels circulent des fumées de combustion admises en 7 et évacuées en 8. Une fraction d'air de combustion, destinée à être admise dans un foyer, par exemple au-dessous de l'admission du charbon divisé dans le cas du circuit d'air primaire d'un réacteur de combustion à lit fluidisé, est introduite en 2 dans un caisson 8A entourant le faisceau tubulaire 1 et évacuée réchauffée en 6. Le trajet de cette fraction comporte des passages à courants croisés par rapport aux tubes 5, représentés par des flèches 3, et des passages parallèles aux tubes, à l'extérieur de ceux-ci, représentés par les flèches 4.

Par ailleurs, une seconde fraction d'air, destinée par exemple à assurer la fluidisation d'un matériau mis en oeuvre dans un échangeur à lit fluidisé, admise en 9, passe dans une enceinte annulaire 7A entourant le caisson 8A, et à l'intérieur d'une virole externe 11. Des caloducs 12 munis d'ailettes 10 très rapprochées car opérant sur de l'air s'étendent transversalement aux passages 4 de la première fraction d'air parallèles aux tubes, et à l'enceinte 7, en traversant la paroi du caisson interne 8. Ils assurent ainsi la transmission à la seconde fraction d'air d'une partie de la chaleur cédée par les fumées à la première fraction d'air dans les passages à courants croisés 3. Cette fraction d'air est évacuée en 13.

La chaleur amenée par les fumées est ainsi transmise d'une part à la première fraction d'air et d'autre part à la seconde fraction d'air par l'intermédiaire de la première fraction d'air. L'échange entre fumées et première fraction d'air est optimale puisque la température de la première fraction d'air se trouve baissée à sa sortie sous l'effet de l'échange avec la seconde fraction d'air.

Ainsi par exemple pour des fumées à 300°C à l'entrée la première fraction d'air passe de 40°C à 220°C vers sa sortie 6 alors que s'il n'existait pas la seconde fraction d'air la température de la première fraction d'air monterait jusqu'à 270°C ce qui rendrait très difficile l'échange de chaleur qui dépend de l'écart entre les deux températures des fluides en échange.

## Revendications

1. Dispositif de réchauffage de deux fractions de gaz, différentes ou sous des pressions différentes, en échange de chaleur avec des fumées résultant de la combustion d'un combustible, notamment en lit fluidisé, comprenant des faisceaux tubulaires (1) parcourus par les fumées et autour desquels circule une première fraction de gaz à réchauffer à l'intérieur d'un caisson (8A), entouré par une enceinte (11) dans laquelle circule une seconde fraction de gaz à réchauffer, caractérisé en ce qu'il comporte en outre des caloducs (12) munis d'ailettes (10) disposés entre le trajet de la première fraction de gaz et celui de la seconde fraction de gaz.

2. Dispositif selon la revendication 1, caractérisé en ce que le trajet de la première fraction de gaz comporte des passages (3) à courants croisés par rapport aux tubes dans lesquels circulent les fumées, et des passages intermédiaires (4) externes à ces tubes, dans lesquels sont disposés les extrémités des caloducs (12) en échange de chaleur avec la première fraction de gaz.

## Patentansprüche

1. Vorrichtung zur Erhitzung von zwei Gasteilströmen, die unterschiedlich sind oder unterschiedliche Drücke aufweisen, durch Wärmeaustausch mit Rauch, der aus der Verbrennung eines Brennstoffs entsteht, insbesondere im Wirbelbett, mit Rohrbündeln (1), die von dem Rauch durchströmt werden und von einem ersten Teilstrom des zu erhitzenden Gases im Inneren eines Behälters (8A) umströmt werden, der von einem Raum (11) umgeben ist, in dem ein zweiter Gasteilstrom strömt, dadurch gekennzeichnet, daß sie außerdem mit Rippen (10) versehene Wärmerohre (12) aufweist, die zwischen dem Weg dieses ersten Gasteilstroms und dem des zweiten Gasteilstroms angeordnet sind.

2. Vorrichtung nach Anspruch 1, dadurch gekennzeichnet, daß der Weg des ersten Gasteilstrom Passagen (3) mit gekreuzten Strömen in Bezug auf die Rohre enthält, in denen der Rauch strömt, und außerhalb dieser Rohre liegende Zwischenpassagen (4), in denen die Enden der Wärmerohre (12) im Wärmeaustausch mit dem zweiten Gasteilstrom liegen.

## Claims

1. Device for heating two gas fractions, by which is meant either different gases or the same gas at different pressures, by exchange of heat with smoke produced by burning a fuel, especially in a fluidised bed furnace, comprising tube bundles (1) through which the smoke flows and around which flows a first gas fraction to be heated inside a box section (8A) surrounded by an enclosure (11) in which flows a second gas fraction to be heated, characterised in that it further comprises heat pipes (12) provided with fins (10) between the path of the first gas fraction and that of the second gas fraction.

2. Device according to claim 1 characterised in that the path of the first gas fraction comprises cross-current passages (3) with respect to the tubes in which the smoke flows and intermediate passages (4) external to said tubes in which are disposed the ends of the heat pipes (12) exchanging heat with the first gas fraction.
